Europäisches Patentamt

European Patent Office

Office européen des brevets

(11) Publication number: **0 365 289**
**A2**

# (12) EUROPEAN PATENT APPLICATION

(21) Application number: **89310667.4**

(22) Date of filing: **17.10.89**

(51) Int. Cl.⁵: **C08L 23/02 , C08K 3/00 , C08J 3/22**

(30) Priority: **21.10.88 US 261018**

(43) Date of publication of application:
**25.04.90 Bulletin 90/17**

(84) Designated Contracting States:
**AT BE CH DE ES FR GB GR IT LI LU NL SE**

(71) Applicant: **BP Chemicals Limited**
**Belgrave House 76 Buckingham Palace Road**
**London, SW1W 0SU(GB)**

(72) Inventor: **Lorigan, Paul Patrick**
**45 St. Elmo Street**
**Nazareth Pennsylvania 18064(US)**
Inventor: **Chang, David Chen-Yaw**
**323 Mountain Lake Road**
**Great Meadows New Jersey 07838(US)**
Inventor: **Bresser, Axel**
**PO Box 82**
**Great Meadows New Jersey 07838(US)**

(74) Representative: **Hymers, Ronald Robson et al**
**BP INTERNATIONAL LIMITED Patents**
**Division Chertsey Road**
**Sunbury-on-Thames Middlesex, TW16**
**7LN(GB)**

(54) Method for producing a filled water-crosslinkable silane copolymer composition.

(57) A method for producing a filled water-crosslinkable silane copolymer composition comprising

(A) a silane copolymer having a silane content of from 2 to 50 percent by weight,

(B) a second polymer prepared from at least one olefin monomer selected from the group consisting of ethylene, propylene, butene, isobutylene, octene, 4-methyl-pentene-1 and hexene,

(C) at least one filler in an amount of from 5 to 75 percent by weight of the total weight of the composition and

(D) an organometallic silanol condensation catalyst, in which method the second polymer, filler and silanol condensation catalyst are blended together to form a masterbatch premix in which the silanol condensation catalyst is substantially homogeneously dispersed and subsequently blending the masterbatch premix with the silane copolymer to form a water-crosslinkable silane copolymer composition in which the silane content is from 0.5 to 25 percent by weight.

EP 0 365 289 A2

# METHOD FOR PRODUCING A FILLED WATER-CROSSLINKABLE SILANE COPOLYMER COMPOSITION

The present invention relates to a method for producing a water-crosslinkable silane copolymer composition, to the composition obtainable by the method and to a method for producing articles from the composition.

It is well known that polymer compositions can be thermoformed, e.g. by extrusion, into a variety of useful articles such as pipe and coatings for electric wire and cable. For some applications, the polymer compositions are not crosslinked, but for others, especially wire and cable insulation, the polymer compositions are crosslinked. Crosslinking the polymer compositions improves their physical properties, particularly their high temperature properties.

A number of methods for crosslinking an ethylene polymer are known. For example, the polymer can be irradiated to cause crosslinking or a free radical generating compound, such as an organic peroxide, can be mixed with the polymer which is then heated to effect the crosslinking. The irradiation technique requires special, expensive equipment and is not suitbale for crosslinking thick sections of polymer. The use of organic peroxides can result in the generation of bubbles in the polymer due to decomposition gases.

Another method of crosslinking a polyolefin is to incorporate into the polymer hydrolysable silane groups which form crosslinks by hydrolysis and condensation in the presence of water, preferably in the presence of a so-called "silanol condensation catalyst". A number of methods are known for producing such water-crosslinkable polymers. For example, polymers crosslinkable by the action of water and a silanol condensation catalyst can be prepared by grafting an unsaturated silane compound having hydrolysable groups on to a preformed polymeric material. Grafting processes of this type can be carried out by heating together a base polymer, for example polyethylene, an unsaturated silane compound bearing one or more hydrolysable groups, a grafting initiator e.g. an organic peroxide and optionally a silanol condensation catalyst under conditions such that the unsaturated silane compound is grafted on to the base polymer. Examples of this method are disclosed in GB-A-1357549, GB-A-1234034, US 3646155, US 4117195, GB 1486952 and GB-A-1286460. Commercial processes which employ a grafting reaction are the SIOPLAS and MONOSIL processes. (SIOPLAS and MONOSIL are registered trade marks). The SIOPLAS process is basically a two-step process in which the base polymer is heated with the unsaturated silane in the presence of a grafting initiator and the product is extruded and pelleted to produce a pelleted silane-grafted thermoplastic polymer in the first step. This pelleted polymer can then be fed with a silanol condensation catalyst to a thermoforming process for fabricating shaped products in the second step. These shaped products are then crosslinked by exposure to water. The MONOSIL process is a one-step process in which the base polymer, the unsaturated silane, the grafting initiator and the silanol condensation catalyst are fed simultaneously to a special extruder in which grafting occurs "in situ" and crosslinkable products e.g. cable or pipe, are directly extruded. These products can be crosslinked by exposure to steam or water under the influence of the silanol condensation catalyst.

The processes for producing crosslinked products by graft copolymerising a polyolefin with a hydrolysable ethylenically unsaturated silane have certain advantages over techniques involving crosslinking by the use of free-radical generators. However, the water-crosslinkable silane-grafted polymers have several drawbacks. One of the disadvantages is that the grafting reaction requires the use of an initiator such as an organic peroxide which can cause crosslinking of the polymer and result in poor extrudate quality. The one-step process requires the use of a specially designed, complex and expensive extruder which is substantially longer than a conventional extruder and a special extruder screw may be required, as described in British patent 964 428. Also, the temperatures at various points along the length of the extruder need to be carefully controlled. The two-step process produces material which can have a relatively short shelf-life. In addition, the surface characteristics of products produced from silane grafted copolymers tend not to be very good. The surface defects are generally most noticeable following a change in the speed of the extrusion line; such as, for example, when the speed of a line for coating a cable is increased again following a decrease in line speed to enable lengths of conductor to be joined. The surface characteristics can be important in a number of possible applications of the graft silane copolymer, but the application for which it is most critical is insulating wire and cable. It has been found that achieving graft levels in excess of 2wt % of silane, while maintaining processability of the grafted polymer is impracticable in both the MONOSIL and SIOPLAS processes.

It is also known that organic polymers containing hydrolysable silane groups which can be crosslinked by the action of water, preferably in the presence of a silanol condensation catalyst can be produced by copolymerising unsaturated organic monomers, for example, ethylenically unsaturated or vinyl monomers, with unsaturated silane compounds containing hydrolysable groups. Examples of this method are described in GB-A-2028831 and GB-A-2039513 which disclose the preparation of crosslinkable copolymers of ethylene and an ethylenically unsaturated silane compound by copolymerising the monomers at relatively high temperatures and pressures in the presence of a free radical polymerisation initiator. Another example of this copolymerisation method is described in GB-A-1415194 which discloses the preparation of crosslinkable copolymer by contacting ethylene and a terminally unsaturated silane compound, optionally with other olefinically unsaturated comonomer, with certain defined Ziegler catalysts under polymerisation conditions which preferably employ relatively low temperatures and pressures.

The chemical structure of the silane copolymer differs from that of the silane grafted composition. For example, with vinyltrimethoxy silane, the pendent silane groups are directly attached to the polymer backbone of the copolymer, i.e., the copolymer lacks 2 carbon atoms between the silicon atom and the backbone. Further patents relevant to this technology are US Patent Nos. 4,413,066 to Isaka et al, 4,297,310 to Akutsu et al, 4,397,981 to Doi et al and 4,446,283 to Doi et al.

Copolymers of alpha-olefins with hydrolysable olefinically unsaturated silane compounds (hereinafter referred to, for convenience, as "silane copolymers") such as those disclosed in GB-2,028,831 and GB 2,039,513 can be used in the fabrication of a large variety of useful products. Blends of silane copolymers and silanol condensation catalysts can be handled and processed using apparatus and techniques conventionally used for plastics fabrication. For example, blends of the silane copolymers and silanol condensation catalysts can be subjected to conventional extrusion, injection moulding, blow-moulding and film blowing processes. An example of a commercial silane-olefin copolymer is SLPE from BP Chemicals Limited (SLPE is a registered trademark).

A limitation of both the silane grafted polymers and the reactor polymerized silane copolymers has been their inability to maintain acceptable physical properties, processing properties and extrudate quality when fillers and additives are incorporated. In particular, silane-modified polymers containing relatively high levels of fillers tend to have a reduced shelf life, a variable cure performance and poor mechanical properties as compared with the unfilled silane-molified polymer.

Fillers are used to enhance such properties as flame retardancy, insulation and mechanical properties, and in some cases, electrical conductivity. US Patents 3,832,326 to North; 3,860,676 to Krackeler; 4,382,112 to Betts; 4,581,362 and 4,477,523 to Biggs disclose crosslinkable flame retardant compositions for wire and cable applications. US Patents 4,400,580 to Yamanouchi et al, 3,849,591 to Ichiba, 3,719,769 to Miyauchi et al, 3,684,821 to Miyauchi et al, 3,769,085 to Matsubara and 3,749,817 to Shiga et al disclose the use of carbon black to produce crosslinkable semiconductive compositions for wire and cable applications. Each of the above mentioned patents uses peroxides or radiation to achieve crosslinking in the final cable. Other mineral fillers, such as clay, calcium carbonate, talc, metal hydroxides, silica and non-conductive carbon black have also been used.

Filled silane grafted copolymers and filled silane ethylene copolymers have had limited success. It has been discovered in the development of this invention that the use of about 1-5 weight % of a catalyst masterbatch containing from 0.4 to 1.0 wt% dibutyltin dilaurate, or equivalent, tumble blended in the extrusion step causes localized sites of precrosslinking in silane crosslinking systems, resulting in an unsatisfactory product with poor physical properties, such as tensile strength, elongation and heat deformation. This makes the composition unacceptable in actual field applications.

US Patent 4,549,041 to Shingo et al discloses a flame retardant composition utilizing a silane grafted water curable composition, but the product has poor mechanical and crosslinking properties.

A method has now been found for producing a filled, water-crosslinkable silane copolymer composition which produces a composition having excellent processability, extrudate quality, shelf stability and crosslinked properties, while fully utilizing filler functionality to impart properties such as flame retardancy, electrical conductivity, ageing properties, weathering stability and insulation properties.

Thus, according to the present invention a method for producing a filled water-crosslinkable silane copolymer composition is characterised in that the composition comprises:

(A) a silane copolymer having a silane content of from 2 to 50 percent by weight,

(B) a second polymer prepared from at least one olefin monomer selected from the group consisting of ethylene, propylene, butene, isobutylene, octene, 4-methyl-pentene-1 and hexene,

(C) at least one filler in an amount of from 5 to 75 percent by weight of the total weight of the composition and

(D) an organometallic silanol condensation catalyst and further characterised in that the second polymer, filler and silanol condensation catalyst are blended together to form a masterbatch premix in which the silanol condensation catalyst is substantially homogeneously dispersed and subsequently blending the masterbatch premix with the silane copolymer to form a water-crosslinkable silane copolymer composition in which the silane content is from 0.5 to 25 percent by weight.

The silane copolymer is produced by copolymerising an alpha-olefin with a hydrolysable, ethylenically unsaturated silane compound; it is not a graft copolymer. The copolymerisation can be carried out under any conditions under which the monomers will undergo copolymerization and suitable techniques are known.

Suitable alpha-olefins which can be used to prepare the silane copolymer include ethylene, propylene, butene, isobutylene, octene, 4-methyl-pentene-1 and hexene. Preferably, the alpha-olefin is ethylene.

The ethylenically unsaturated silane compound used to prepare the silane copolymer is preferably a compound having the general formula:

R Si R$^1_n$ Y$_{3-n}$

wherein R represents an ethylenically unsaturated hydrocarbyl or hydrocarbyloxy group; R$^1$ represents an aliphatic saturated hydrocarbyl group; Y represents a hydrolysable organic group; and n represents zero, 1 or 2. R can have, for example, from 2 to 8 carbon atoms and can be, for example, vinyl, alkyl, isopropenyl, butenyl, cyclohexenyl, gamma-acryloxypropyl or gamma-methacryloxypropyl. R$^1$ can have, for example from 1 to 14 carbon atoms and can be, for example, methyl, ethyl, propyl, hexyl, octyl, decyl or phenyl. Y can be, for example, an alkoxy group, acyloxy group or hydrocarbylamino group and suitable groups include methoxy, ethoxy, formyloxy, acetoxy, propionyloxy, alkylamino and acrylamino groups. If there is more than one Y group, they can be the same or different from each other. R is preferably a vinyl group, Y is preferably methoxy, ethoxy or acetoxy. Preferred ethylenically unsaturated silane compounds are vinyl trimethoxysilane, vinyltriethoxysilane and vinyltriacetoxysilane.

The silane copolymer has a silane content of from 2 to 50 percent by weight, based on the copolymerized units of silane compound in silane copolymer. More preferably the silane content of the silane copolymer is from 2 to 10%, most preferably 3.0 to 7.0% by weight.

In addition to the alpha-olefin and hydrolysable, ethylenically unsaturated silane, the silane copolymer can optionally contain one or more further comonomers. The amount of comonomer will generally be less than 30% by weight. Suitable further comonomers include vinyl esters such as vinyl acetate, vinyl butylate and vinyl pivalate; unsaturated carboxylic acids, such as acrylic acid, methacrylic acid and fumaric acid; acrylates or methacrylates such as methyl (meth) acrylate and butyl (meth) acrylate; vinyl ethers such as vinyl methyl ether and vinyl phenyl ether; and derivatives of acrylic or methacrylic acid such as acrylonitrile and methacrylamide.

The amount of the silane copolymer in the composition is from 2 to 50 weight precent, preferably from 15 to 55, more preferably from 10 to 50 weight percent based on the total weight of the composition.

The second polymer is prepared from at least one olefin monomer selected from the group consisting of ethylene, propylene, butene, isobutylene, octene, 4-methyl-pentene-1 and hexene. It is possible that the silane copolymer and the second polymer comprise the same olefin or olefins. Examples of polymers suitable for use as the second polymer are; polypropylene and homopolymers and copolymers of ethylene such as low density polyethylene (LDPE); high density polyethylene (HDPE); linear low density polyethylene (LLDPE); very low density polyethylene (VLDPE) copolymers of ethylene with vinyl acetate (EVA), copolymers of ethylene with ethylacrylate (EEA); copolymers of ethylene with methyl acrylate (EMA); ethylene-propylene copolymers , ethylene-propylene-diene monomer rubber-(EPDM), ethylene propylene rubber (EPR) and semi-crystalline copolymers of propylene, ethylene and polybutene-1.

The amount of second polymer included in the composition can be from 5 to 50% by weight of the total composition. The amount of second polymer will vary in relation to the silane copolymer such that the silane content of the composition is from about 0.5 to 25%, preferably from about 1 to 25% more preferably 1 to 10% by weight.

The filler component of the composition comprises one or more fillers or reinforcers to provide a combination of properties desired for each specific application. Examples of suitable fillers include carbon black, aluminum trihydrate, zinc oxide, ammonium polyphosphate, aluminium silicate, hydrated magnesia, hydrated calcium silicate, glass beads or strands, silica, clays, talcs, carbonates, particularly calcium carbonate, hydrates, organic halogen containing flame retardant chemicals, antimony oxides, magnesium silicate, phosphates, and other suitable materials listed in Rubber World Magazine Blue Book at pages 241-289 (Lippincott and Peto 1987). The total filler content can range from about 5 to 75%, preferably about, 5 to 70% and more preferably about 15-50% weight of the total composition. Typically the amount of filler will be from 20 to 60% by weight.

Any of the organometallic silanol condensation catalysts known in the art for crosslinking silyl-modified polymers can be suitably employed in the present invention. They can be used in the quantities conventionally employed. Examples of suitable classes of organometallic silanol condensation catalysts are organic titanates and complexes or carboxylates of lead, cobalt, iron, nickel, zinc and tin. Specific examples of suitable organometallic silanol condensation catalysts are dibutylatin dilaurate, dibutyltin maleate dibutyltin diacetate, dibutyl tin dioctoate, stannous acetate, stannous caprylate, lead naphthenate, zinc caprylate, cobalt naphthenate; carboxylates of tin are preferred. Particularly preferred silanol condensation catalyst are dialkyl tin carboxylates such as dibutyltin dilaurate and dibutyl tin maleate.

The quantity of silanol condensation catalyst employed in the water-crosslinkable composition is suitably in the range 0.0005 to 0.5 moles, preferably in the range 0.001 to 0.05 moles, per mole of hydrolysable silane units in the silane copolymer. Generally, the quantity of the silanol condensation catalyst is in the range from 0.01 to 5% by weight, most preferably 0.03 to 0.2% by weight, relative to the quantity of silyl polymer in the composition. The silanol condensation catalyst can be used as a preblended concentrate with a polymer, which is preferably the same as the second polymer.

The water-crosslinkable composition can contain other minor components such as additives conventionally employed in the art. Examples of such additives are antioxidants, UV stabilizers, release agents, processing aids, nucleating agents, colourants, pigments, metal deactivators, lubricants, water-tree inhibitors and foaming agents. Such additives are preferably used in an amount cumulatively not exceeding 25% by weight of the total weight of the composition. The additives can be added directly or by a masterbatching technique.

An antioxidant component is generally included to assist in achieving good extrudate quality. The exact level and type of antioxidant will depend on the amount and type of silane coplymer, the second polymers and the filler used in the electrical insulating composition. The preferred antioxidant types and levels can also vary depending on the performance criteria of the finished product.

A blend of 3 specific antioxidants is preferred. These antioxidants are tetrakis [methylene 3-(3′,5′-di-tert-butyl-4′-hydroxyphenyl)propionate] (hereafter referred to as "tetrakis methane"), thiodiethylene bis-(3,5-di-tert-butyl-4-hydroxy) hydrocinnamate (hereinafter referred to as "thiodiethylene hydrocinnamate"), and distearylthiodipropionate (hereinafter referred to as "DSTDP").

Tetrakis methane is disclosed in more detail in US Patent Nos. 3,285,855 and 3,644,482, and is available from Ciba-Geigy as Irganox 1010 (IRGANOX is a registered trade mark).

Thiodiethylene hydrocinnamate is disclosed in more detail in US Patent Nos. 3,285,855 and 3,441,575, and is available from Ciba-Geigy under the name Irganox 1035.

DSTDP is available under the name Cyanox from American Cyanamid (CYANOX is a registered trademark).

The preferred weight ratios of tetrakis methane: thiodiethylene hydrocinnamate: DSTDP are 2:1:2, respectively. Preferred levels are 0.64%, 0.32% and 0.64%. Other antioxidants can also be used in the silane olefin composition including other hindered phenolic esters, dithioalkylated phenols, organic phosphates and polymerized hydrated methyl quinolines. Other useful antioxidants can also be found in Rubber World Magazine Blue Book at pages 131-172 (Lippincott and Peto 1987), which is incorporated by reference herein.

An advantage of the method according to the present invention is that each of the two components, viz the masterbatch premix and the high silane content silane copolymer, has a relatively long shelf life i.e. at least one year at 23°C and 50% relative humidity.

The method according to the present invention comprises blending the second polymer, filler and silanol condensation catalyst together to form a masterbatch premix in which the silanol condensation catalyst is substantially homogeneously dispersed and then subsequently blending the masterbatch premix with the silane copolymer. Antioxidants and any other additives are preferably incorporated into the masterbatch premix. The masterbatch premix can be formed using known techniques. For example, the premix can be prepared by melt blending e.g. in a Banbury mixer or an extruder. Dry blending e.g. tumble blending the components of the masterbatch premix just prior to melt blending can substantially improve the performance properties of the composition. Conveniently, the premix is prepared by melt blending and then pelletizing the composition. The masterbatch premix and silane copolymer can be mixed together by any suitable technique such as tumble blending. Preferably, the premix and silane copolymer are mixed together just prior to or during the thermoforming of the composition into an article.

The present invention includes water-crosslinkable compositions obtainable by the method hereinbefore described. It has been found that the filler is incorporated in these compositions in an improved fashion as compared with the known water-crosslinkable compositions. This improved incorporation of filler is indicated by the surprisingly improved quality of extrudate produced from the compositions. The improvement in extrudate quality can be sustained over relatively long production running times.

After thermoforming the water-crosslinkable composition into a finished article, it can be readily crosslinked by exposure to water in the form of liquid, steam or moist air. The rate at which the compositions crosslink depends on temperature and the rate at which the water diffuses into the material.

According to Fick's diffusion law, if the water cure is diffusion controlled, the crosslinking should be proportional to the square root of time and follow the relationship:

Thickness = K(square root of time),

where K is a constant related to the density of the composition. For example, cure rates for insulation thickness of vinyltrimethoxy silane and ethylene copolymer (1.2% silane), where K = 925, melt flow rate = 1.5 at 190°C and 2160 grams weight are in accordance with the following table:

| Insulation Thickness (mils) | Time (Hrs of water @ 85°C) |
|---|---|
| 28 mils (0.7mm) | 2 |
| 71 mils (1.8mm) | 3-5 |
| 118 mils (3.0mm) | 4-8 |

Insulation less than 40 mils (1.0mm) thick can be cured by storage at ambient conditions in about one to two weeks.

The present invention includes a method for producing an article comprising a crosslinked silane copolymer composition which comprises thermoforming a water-curable silane copolymer composition obtainable by the method as hereinbefore described and thereafter crosslinking by exposure to water. The thermoforming process is preferably an extrusion process.

The water-curable silane copolymer compositions according to the present invention are particularly useful in the manufacture of wire or cable, and the invention includes a method for producing wire or cable comprising at least one layer of the crosslinked silane copolymer composition. The layer of the wire or cable can be an insulation layer, a semi-conductive layer or an insulating layer. Wire and cable coatings made from compositions according to the present invention have been found to have excellent electrical, mechanical and physical properties and excellent processing characteristics. The combination of these characteristics have been found to be superior to water-crosslinkable compositions prepared by known methods.

It has been found that particularly suitable wire and cable compositions according to the present invention comprise an ethylene-vinyltrimethoxy silane copolymer as the silane copolymer and a linear low density polyethylene as the second polymer. In particular, such a composition can be useful as a semi-conductive layer in a cable construction, when the filler is an electrically conductive carbon black.

The inventive composition and insulation for cables and wire made from the inventive composition can be manufactured with conventional compounding equipment, such as Banbury, continuous mixers, compounding extruders with single and multiple screws, and Buss Condux kokneaders (Buss Company, West Germany).

The processability and thus the acceptability of a crosslinkable wire and cable composition can be assessed for different applications by examining the surface finish for smoothness. A desirable surface is substantially free from imperfections. Compositions having premature "gels" or poor filler dispersion often show lumps, irregular grain, poor definition and lack of sharpness. It is important that wire and cable compositions do not have these defects, which adversely affect the electrical and physical properties of cable performance.

For testing and evaluation purposes, an extruded tape about 1 inch wide (25.4 mm) and about 0.025 inches thick (0.64 mm) is made from the inventive composition and evaluated in accordance with the following indicia of acceptability:

| | Number of Gels | |
|---|---|---|
| Gel Diameter | Excellent | Satisfactory |
| 0.10 to 0.25 mm | 0 | up to 5 |
| 0.25 to 0.50 mm | 0 | up to 3 |
| greater than 0.50 mm | 0 | up to 2 |
| Surface appearance | glossy | matt |

From a practical standpoint, any composition used for wire and cable applications has to meet certain industrial requirements. Such specifications as Underwriters Laboratory (UL-44), Insulated Cable Engineers Association (ICEA S-66-524) or ICEA P-81-570 or Society of Automotive Engineers (SAE J1128) have been well recognized and accepted as standards by the marketplace. The major physical property requriements in these specifications are listed as follows:

| | ICEA S-66-524 | ICEA P-81-570 | SAE J-1128 | UL-44 (XHHW) |
|---|---|---|---|---|
| Tensile Strength psi | 1800 min. | 2000 min. | 1500 min. | 1500 min. |
| Elongation % | 250 min. | 300 min. | 150 min. | 150 |
| Hot Creep % 150°C, 29 psi, 15 min | 100 | - | - | - |
| Hot Set 15°C | 5% | - | - | - |
| Heat Ageing 121°C, 168 hrs (% Retained Tensile Strength) | 75% | - | - | 70 |
| Heat Ageing 150°C, 168 hrs (% Retention of Tensile Strength) | . | 75 | - | - |
| Heat Deformation %, 121°C | | | | 10 max. |

According to the present invention, it was found that superior physical properties were achieved by the inventive filled water curable composition which in all cases exceeded all the above specifications. The inventive composition favourably compared with application standards attained by peroxide crosslinking.

Another important criterion is extrudate quality, which is evaluated qualitatively. However, those skilled in the art are readily able to ascertain extrudate quality by visual examination and touch.

The following examples illustrate the present invention. All parts and percentages are by weight unless otherwise noted.

## Example 1

The following components were blended in a 11D Banbury mixer to a homogeneous state and then pelletized in a pelletizing extruder to $\frac{1}{4}$ inch (6.35 mm) diameter at an extrusion temperature of 285°F (140°C) and slurry water temperature of 120°F (49°C). The screw L/D was 24 to 1, and operated at 30 rpm.

| Component | Parts |
|---|---|
| Linear low density polyethylene (fractional melt) | 75.28 |
| Carbon black (N-990 classification) | 22.58 |
| Dibutyltin maleate | 0.03 |
| Irganox 1010 | 0.84 |
| Irganox 1035 | 0.43 |
| DSTDP | 0.84 |

Process Conditions: Drop temperature 285°F (140°C), rotor speed 52 rpm, ram pressure 60 psi (414 kPa), cycle time 8 minutes.

The pellets were then blended in a 3 to 1 weight ratio with a silane-ethylene copolymer, containing the equivalent of 5 wt % vinyltrimethoxy silane. The copolymer had a 3.0 melt index at 190°C, 2160 gram weight and 0.932 g/cm$^3$ density. An extrusion in a laboratory extruder was used to simulate a wire coating extrusion process. An extruded sheet 1 inch (25.4 mm) wide, 25 mils (0.635 mm) thick was fabricated and exposed to a 90°C water bath for 24 hours. Extrusion conditions: extruder size 24 to 1 L/D, diameter 1 inch(25.4mm), melt temperature 145°C, screen pack 80-100-80, compression ratio 1:1. The following properties were obtained:

7

| Cured Finished Product | |
|---|---|
| Tensile Strength, | 2640 psi (18.2 MPa) |
| Elongation, | 450 % |
| Hot Creep (150°C, 29 psi (200 kPa), 15 min.), | 61 % |
| Heat Deformation 121°C, | 1.7 % |
| Extrusion Quality | Excellent |

This example demonstrated that excellent crosslinking and tensile properties can be achieved while maintaining excellent extrusion quality.

Physical properties and extrudate quality were excellent. A marked improvement in extrudate quality was realized by predispersing the catalyst.

Comparative Example A

The following components were mixed in a 11D Banbury mixer without catalyst under the same conditions as Example 1.

| Component | Parts |
|---|---|
| Linear low density polyethylene (fractional melt) | 55.14 |
| Ethylene silane copolymer (same as Example 1, 5% silane, 3.0 melt index) | 25.77 |
| Carbon black (N 990 specification) | 17.46 |
| Irganox 1010 | 0.65 |
| Irganox 1035 | 0.33 |
| DSTDP | 0.65 |

Two percent dibutyltin maleate catalyst (0.75% active) was then blended into the above composition. Extrusion sheets to prepare samples for testing as in Example 1 were made. The following results were obtained after a water exposure at 90°C for 24 hrs:

| Cured Finished Product | |
|---|---|
| Tensile Strength, | 2360 psi (16.3 MPa) |
| Elongation, | 450 % |
| Hot Creep, | 85 % |
| Heat Deformation, | 2.8 % |
| Extrusion Qualtiy | Satisfactory |

Comparative Example A demonstrated that a composition prepared by first predispersing the high silane content copolymer with functional filler components and then adding a catalyst concentrate at the extrusion step had properties which exceeded industry standards, but the extrudate quality was only satisfactory. The properties of Example 1 were superior because of the preliminary homogeneous predispersion of the catalyst prior to contacting with the silane modified olefin copolymer at the point of extrusion.

**Claims**

1. A method for producing a filled water-crosslinkable silane copolymer composition characterised in that the composition comprises:
(A) a silane copolymer having a silane content of from 2 to 50 percent by weight,

8

(B) a second polymer prepared from at least one olefin monomer selected from the group consisting of ethylene, propylene, butene, isobutylene, octene, 4-methyl-pentene-1 and hexene,

(C) at least one filler in an amount of from 5 to 75 percent by weight of the total weight of the composition and (D) an organometallic silanol condensation catalyst,

and in that the second polymer, filler and silanol condensation catalyst are blended together to form a masterbatch premix in which the silanol condensation catalyst is substantially homogeneously dispersed and subsequently blending the masterbatch premix with the silane copolymer to form a water-crosslinkable silane copolymer composition in which the silane content is from 0.5 to 25 percent by weight.

2. A method as claimed in claim 1 in which the masterbatch premix and silane copolymer are blended together to form the water-crosslinkable silane copolymer composition just prior to or during thermoforming of the composition into an article.

3. A method as claimed in claim 1 or claim 2 in which the masterbatch premix further comprises an antioxidant.

4. A method as claimed in any one of claims 1 to 3 in which the filler is selected from the group consisting of carbon black, aluminium trihydrate, zinc oxide, ammonium polyphosphate, aluminium silicate, hydrated magnesia, hydrated calcium silicate, glass beads or strands, silica, clays, talcs, carbonates, hydrates, organic halogens, antimony oxides, magnesium silicate, phosphates and mixtures thereof.

5. A method as claimed in any one of claims 1 to 4 in which the second polymer is selected from the group consisting of low density polyethylene, high density polyethylene, linear low density polyethylene, very low density polyethylene, polypropylene, ethylene-propylene-diene monomer rubber (EPDM) ethylene-propylene copolymer, ethylene-propylene rubber (EPR), ethylene-ethylacrylate copolymer, ethylene-methyl acryate copolymer, ethylene-vinyl acetate copolymer and polybutene-1.

6. A method as claimed in any one of claims 1 to 5 in which the silane copolymer is ethylene-vinyl trimethoxy silane and the second polymer is linear low density polyethylene.

7. A method as claimed in claim 6 in which the filler is electrically conductive carbon black.

8. A water-crosslinkable silane copolymer composition obtainable by a method as claimed in any one of claims 1 to 7.

9. A method for producing an article comprising a crosslinked silane copolymer composition characterised in that a water-crosslinkable silane copolymer composition as claimed in claim 7 is thermoformed into an article which is thereafter exposed to water.

10. A method as claimed in claim 9 in which the thermoforming process is extrusion.

11. A method as claimed in claim 10 in which the article is a wire or cable comprising at least one extrusion coated layer of the silane copolymer composition.

12. An article prepared by a method as claimed in any one of claims 9 to 11.